# EUROPEAN PATENT APPLICATION

(11) **EP 1 437 540 A2**
(43) Date of publication of application: **14.07.2004**
(21) Application number: 04003470.4
(22) Date of filing: 14.05.1997
(51) Int. Cl.: F16L 37/18

(54) **Activation pin**

(30) Priority: 14.05.1996 DK 16896; 24.05.1996 DK 18096; 28.06.1996 DK 22796; 31.01.1997 DK 4897
(62) Divisional of application: 97921647.0
(71) Applicant: NVB INTERNATIONAL, 3460 Birkerod (DK)
(72) Inventor: The designation of the inventor has not yet been filed
(74) Representative: Baldwin, Mark

(57) **Abstract**

By means of an activating pin for a valve connector, which activating pin is designed as a piston (301) with a piston rod (302), moving in the coupling house of the valve connector where the activating pin has a central drilling (303) and a piston valve (304) kept closed by a spring force, the aim is to produce a reliable activating pin which is reliable, cheap, has low aerodynamic drag and thus, is comfortable to use for pumping purposes and provides the shortest possible pumping time.

Pursuant to the invention, this is achieved by the fact that one or more channels (303,321) are defined by the piston rod (302) and/or the piston valve rod (322) in the assembled activating pin which channels (303,321) are positioned in a mainly longitudinal direction in relation to the centerline (337) of the activating pin, of which the cross section approximately can be defined by at least one closed curve, which can be defined by two unique modular parametrisation Fourier Series expansions.

## Description

### TECHNICAL FIELD

The invention concerns an activation pin for a valve connector, which activation pin is designed as a piston with a piston rod, moving in the coupling house of the valve connector where the activation pin has a central drilling and a piston valve kept closed by a spring force.

### BACKGROUND OF THE INVENTION

It is well-known (WO 96/10903) that an activation pin in the coupling house is designed as a piston equipped with a suitable seal with a piston rod that is slidable in the cylinder-shaped coupling house and that can be held in a longitudinal position against the cylinder valve without applying physical force so that the sliding of the piston after the placing of the valve connector takes place automatically by means of compressed air which comes from the pressure source and so that the piston, in the proximal position to the valve, where the piston opens up the inner valve, opens to air passage to the valve and, in the distal position from the valve, tightens less than 100% against the cylinder wall.

Figure 14 (WO 96/10903) shows a valve (360) which must be closed against the piston control. The disadvantage is that the above-mentioned two seals must be operational at a certain section of the sliding. This requires very accurate calibration of the cylinder wall and the piston movement. Furthermore, the piston has a precisely defined opening zone and can thus only adjust itself to a minor extent to the tolerances of the pump valve in question.

The figures 8, 9, 10, 14, 15 (WO 96/10903) show various activation pins equipped with a centre blind drilling or a centre drilling, respectively, and side drillings and a V-shaped milling at the bottom which is perpendicular to the centre axial drilling of the piston. The effect of this is that more force than necessary has to be applied when pumping, especially at high air velocities.

In Figure 9 (WO 96/10903) an activation pin is shown which has a central drilling and side drillings and a V-shaped milling at the bottom. When the coupling is connected to e.g. a high pressure pump with a built-in check valve, the spring keeps the valve of the activation pin in a closed position after uncoupling of a Schrader-valve. If a tire with a Sclaverand valve has to be pumped immediately afterwards, one has to apply a big force in order to be able to slide the activation pin which then will open the inner valve of the Sclaverand-valve. Air will escape and consequently the pumping time will be substantially longer if the tire has already been partly pumped. This last-mentioned problem also exists in the embodiments shown in Figure 10,15 (WO 96/10903).

### THE OBJECT OF THE INVENTION

The purpose of the present invention is to produce a reliable activation pin which is cheap, which has low aerodynamic drag and thus comfortable to use for pumping purposes and which provides the shortest possible pumping time.

Pursuant to the invention, this task is solved by the invention mentioned in claim 1 where one or more channels are defined by the piston rod and/or the piston valve rod in the assembled activation pin which channels are positioned in a mainly longitudinal direction in relation to the centre axis of the activation pin, of which the cross section approximately can be defined by at least one closed curve, which can be defined by two unique modular parametrisation Fourier Series expansions, one for each co-ordinate function: 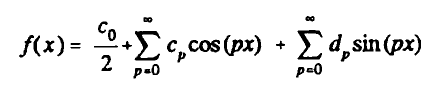 where 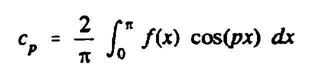 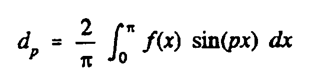 0 ≤ *x* ≤2π, *x* ∈ 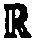 *p* ≥ 0, *p* ∈ 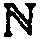
- *c*_{*p*} =: *cos-weighted average values of f(x),*
- *d*_{*p*} =: *sin-weighted average values of f(x),*
- *p* =: *representing the order of trigonometrical fineness*
resulting in a large flow cross section area. All kinds of closed curves can be described with this formula, e.g. a C-curve. A characteristic for these curves is that when a line is drawn from the mathematical pole which lie in the section plane it will hit the curve at least one time. A regular curve bounding a region which is symmetric with reference to at least one line which lie in the section plane through the mathematical pole can be defined by a single Fourier Series expansion: 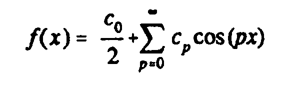 where 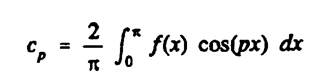 0 ≤ *x* ≤ 2π, *x* ∈ 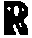 *p* ≥ 0, *p* ∈ 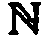
- *c*_{*p*} =: *weighted average values of f(x),*
- *p* =: *representing the order of trigonometrical fineness*
When a line is drawn from the mathematical pole it will always hit the curve only one time. In order to minimize the aerodynamic friction the channels are positioned mainly parallel to the centerline of the activation pin. When the curves approximately are defined by the following formula the cross section area of the channels are optimized by a certain given cross section: e.g. a section which combines approximately laminair flow and which can guide a central piston valve rod. It is then also possible to obtain a contact area for a Schrader valve core. This means that a bridge is unnessary. In the following description curves defined by the following formula have been given the name "flower-shaped". The formula is: 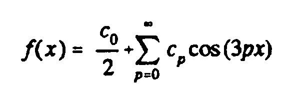 where$\text{f} \text{(} \text{x} \text{) =} {\text{r}}_{\text{0}} \text{+} \text{a.} \sqrt[\text{2m}]{{\text{sin}}^{\text{2}} \text{(} \frac{\text{n}}{\text{2}} \text{)} \text{x}}$ 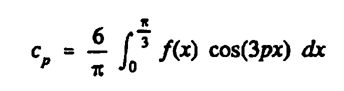 0 ≤ *x* ≤ 2π, *x* ∈ 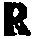 *p* ≥ 0, *p* ∈ 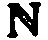
- *c*_{*p*} =: *weighted average values of f(x),*
- *p =*: *representing the order of trigonometrical fineness*
and where this cross section in polar co-ordinates is represented by the following formula: 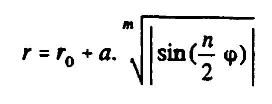 where
*r*_{*0*} ≥ 0,
*a* ≥ 0,
*m* ≥ 0, *m* ∈ R,
*n* ≥ 0, *n* ∈ R,
0 ≤ ϕ ≤ 2π,
and where
- *r =*: *the limit of the "petals" in the circular cross section of the activation pin,*
- *r*_{*0*} *=*: *the radius of the circular cross section around the axis of the activation pin,*
- *a =*: *the scale factor for the length of the "petals ",*
- *r*_{*max*} *=*: *r*_{*0*} + *a*
- *m =*: *the parameter for definition of the "petal" width*
- *n =*: *the parameter for definition of the number of "petals "*
Pursuant to the invention, an activation pin ensures a large flow cross section which by means of radially fins also produces an approximate laminar flow which contributes to a reduced pressure drop during the flow. Similarly, the radially fins can control any centrally positioned valve without blocking the air passage.

In a first appropriate embodiment of the invention, the piston rod is equipped with two blind drillings parallel with the centre axis that reaches the activation pin at both ends of the activation pin and with a concentric valve made of an elastic material, e.g. a valve rubber used on a Dunlop-Woods valve and squeezed onto the piston rod between e.g. its upper and lower part covering the radial drilling proximal to the pressure source. The radial drilling has an azimuth angle ∝ larger than or equal to 90° to the centre axis of the piston seen in the flow direction of the air at flow from the side of the pressure source. Furthermore, the distal radial drilling has an azimuth angle β larger than or equal to 90° to the distal centre drilling of the piston, seen in the flow direction of the air at flow from the side of the pressure source. To ensure an interaction between the piston and the inner valve in a Schrader-valve, the radius r₀ in the distal blind drilling is smaller than the radius r₀ of the proximal part of the centre drilling. Due to evident arrangements in dimensioning the by-pass, the piston control is proximally equipped with longitudinal air ducts and/or it has a bigger diameter. Moreover, the side of the piston is chamfered. If connected to e.g. a pump with a built-in check-valve the connector needs to have an airing valve or a similar solution, providing shortest pumping time. This results in a reliable activation pin as the pin valve works independantly of the piston control fit and tolerances of the pump valves in question. A pin with a low aerodynamic drag which is comfortable for pumping purposes and a pin which is cheap to produce.

A second appropriate embodiment is an improvement of the first embodiment, if the coupling is connected to e.g. a high-pressure pump with a built-in non-return valve. A spring force being produced by means of the combination of compressed air and the valve lever passing through the piston in an eccentric position ensures lowest possible pumping time. The effect of the eccentric valve lever is that the air pressure in the space between the non-return valve of the pump and the activation pin becomes equal to the pressure of the surroundings as the valve lever opens the above-mentioned space if a Schrader-valve is disconnected. It is thus always possible to couple a Sclaverand-valve without air escaping from the tire. Alternatively, an airing valve which is constantly shut could be established in the above-mentioned space when the connector is coupled to the valves or when the activation pin touches the core of the Schrader valve. This can take place if, for example, the airing is shaped as a narrow channel at the pressurized side of the activation pin to the distal end of it. In a special appropriate embodiment it is proposed that the eccentric valve lever is integrated in the piston valve which makes the activation pin cheap to produce. The pin works independantly of the piston control fit.

A third appropriate embodiment comprises a simular combination as described in the second embodiment, but the difference is the pin has a central drilling. It is appropriate if the central drilling at each end expands gradually by a circular cross section and has an angle y or δ, respectively, with the center axis of the activation pin and each is larger than 0° and smaller than 20°, usually in the interval between 6° and 12°. In an appropriate embodiment, the top of the piston of the activation pin forms a valve seat for the valve (304). This results in a big opening area by a small movement of the eccentric valve lever. In a special appropriate embodiment it is suggested that the eccentric valve lever is loose in the piston and a stop device is used for its movement and that a stop device is used for the piston valve which is an integrated part hereof and is resilient in relation to it. The piston valve rod has e.g. a "flower-shapped" cross section and the piston rod e.g. a circular, resulting in air channels (321). The activation pin is very reliable and cheap to produce. The air flow in the valve connector is approximately laminar which ensures low aerodynamic drag so that it is comfortable when pumping even with (low pressure) pumps without an integrated non-return valve: the improvement above the activation pin in figure 9 (WO 96/10903) is considerable regarding reduction in pumping force and pumping time.

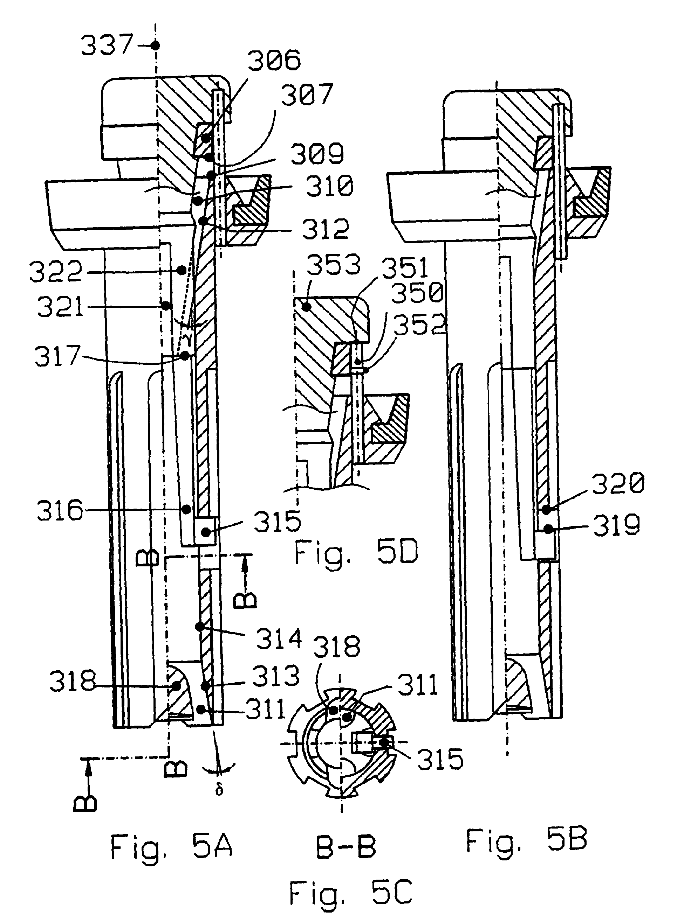

A fourth embodiment is an altemativ of the third embodiment, as the piston valve is rotating at an angle θ in relation to the top of the piston, if activated by the eccentric valve lever. The rotation is limited with a stop device. The cross section of the piston rod can have two main forms according the specific formula: "flower-shaped" with different parameters, both resulting in an approximately laminair flow. In a specific appropriate embodiment the radius r₀ is smaller than the radius of the core of Schrader, while the air is flowing through the distals of the "flower shaped" cross section. The eccentric valve lever is similar of the loose type of Figure 5D, with the diffrence that the top is rounded off. The characteristics of this model are almost in accordance with these from the third embodiment.

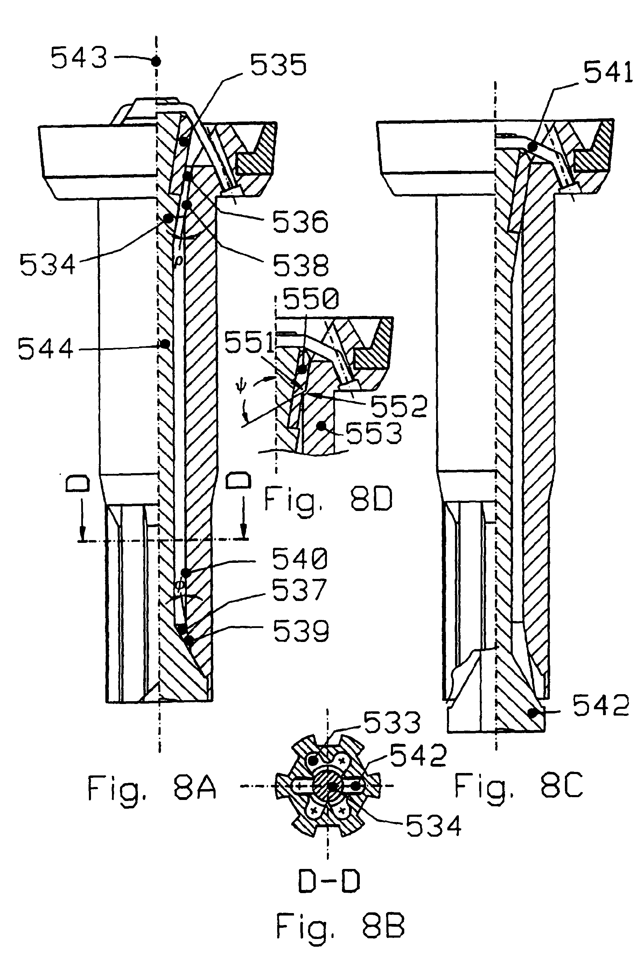

In a fifth appropriate embodiment of the invention, the activation pin is designed as a piston with a piston rod that is slidable in the cylinder-shaped coupling house where the activation pin has a centre drilling with an axially slidable valve in the centre drilling that is kept closed by a spring where the centre drilling of the activation pin has e.g. a "flower-shaped" cross section (D-D, figure 8B) and the piston valve rod a circular one resulting in a reliable control and efficient air passage and the centre drilling at each end expands gradually by a circular cross section. The walls of the gradual expansions form an angle ρ or φ, respectively, between 0° and 20° (usually in the interval between 6° and 12°). The wall of the gradual expansion by the piston part of the centre drilling forms a valve seat for the seal face of the valve. The seal face of the valve is pressed into the correct position by a spring, e.g. an elastic band. In a special appropriate embodiment the sealing surface is a small area with an angle ψ in relation to the centre axis of approximately 90°-150° (incl.), seen in the flow direction of the air at flow from the side of the pressure source, enabling an improved sealing. In a special appropriate embodiment, the valve is equipped with at least one fin or a similar device which fits on the top of the edge of a Dunlop-Woods inner valve. It fits the top of the core of the Schrader-valve too or it fits the bridge of the Schrader-valve, without fitting the top of this core, as the activation pin does. In the last mentioned embodiment the fin is equipped with a device perpendicular to the fin. Furthermore, the centre drilling in the last-mentioned embodiment can also be designed in a way that provides a favourable flow in the area around the fin of the piston part. If e.g. combined with a pump with a built-in check-valve the space between the connector and the check-valve need to have an airing or a similar solution. The activation pin is reliable, as it works independant of the piston rod fit and the tolerances of the pump valves. It is cheap to produce and it gives a low pump force, specifically with pumps without a check-valve. It works independant of piston control fit or pump valve tolerances.

In a sixth appropriate embodiment of the invention, the activation pin has a centre axial drilling with a valve that is axially slidable in the drilling and that is kept closed by means of a spring. The valve and the spring are made in one piece of a deformable material. The axially slidable valve and the spring are partly formed by a conic section with an apex angle (2ε) and partly by an approximate cylindrical section with a mainly circular cross section. The spring is attached to the piston part of the activation pin by means of a securing device. This is expedient if the wall of the centre drilling in the activation pin is gradually expanded and has an angle η or ν, respectively, in relation to the centre axis of the activation pin which each is larger than 0° and smaller than 20° (usually in the interval between 6° and 12°). The wall of the gradual expansion of the centre drilling thus forms a valve seat for the seal face of the valve. The valve is pulled to the tightening position by the spring. In a special appropriate embodiment of the invention, the piston part is equipped with at least one fin or a similar device which fits on top of the core of Schrader. In another appropriate embodiment of the activation pin, the slidable valve has two cones resting upon each other. This turns the air flow around the valve and in the grooves into an approximate laminar flow. The piston valve rod and the piston rod defines e.g. a cylindrical air channel, while the rest of the piston rod has a "flower-shaped" cross section. The embodiment of the flow ensures low aerodynamic drag so that it is comfortable when pumping even with low pressure pumps without an integrated non-return valve. Besides, the invention is cheap. It works independantly of piston control fit and pump valve tolrances. In a special appropriate embodiment the sealing surface of the cones is a small area with an angle ξ in relation to the centre axis of approximately 90°-150° (incl.) with the centre axis seen in the flow direction of the air at flow from the side of the pressure source, enabling an improved sealing. In the case of combining this embodiment with pumps with an built-in check-valve, the space between the connector and the check-valve needs to be equipped with airing or the like.

Instead of air, gasses and/or liquids of any kind can activate and run through and around the embodiments of the activation pin. The invention can be used in all types of valve connectors, where at least a Schrader valve or any valve with a spring operated core can be coupled, irrespective the method of coupling or the amount of coupling holes in the connector which can be coupled to any pressure source. Any possible combination of the embodiments shown in the specification fall into the scope of the present invention. The various embodiments described above are provided by way of illustration and should not be constructed to limit the invention. Those skilled in the art will readily recognize various modifications and changes which may be made to the present invention without strictly following the exemplary embodiments and applications illustrated and described herin, and without departing from the true spirit and scope of the present invention.

### SPECIFICATIONS OF THE DRAWINGS

In the following, the invention is described in details by means of the preferred embodiments of which the main construction elements are shown on the drawings. The following is shown on the drawing:
- Figure 1A: shows an illustration of a channel's curve which is defined by two unique modular parametrisation Fourier Series expansion.
- Figure 1B: shows an illustration of the mathematical model of the "flower-shaped" cross section.
- Figure 2: shows a first embodiment of the activation pin shown in a distal position to the pressure source in a valve connector that can be squeezed onto valves.
- Figure 2A: shows an enlargement of the piston valve according to Figure 2. The broken line drawing shows the valve when it is open.
- Figure 2B: shows the side drilling positioned distally in the piston rod together with a centre blind drilling of the embodiment of Figure 2.
- Figure 3A: shows an enlargement of a further development of the second embodiment of the activation pin where the valve in the activation pin is activated by the eccentric valve lever.
- Figure 3B: shows the activation pin according to Figure 3A where the valve in the activation pin is kept closed by air pressure.
- Figure 3C: shows section A-A of Figure 3A.
- Figure 3D: shows the top of the piston and valve of the activation pin from above according to Figure 3A (view X).
- Figure 4: shows a third embodiment of the activation pin in a distal position to the presure source in a valve connector that can be squeezed onto valves.
- Figure 5A: shows an enlargement of the activation pin according to Figure 4. The valve of the activation pin is activated by the eccentric valve lever.
- Figure 5B: shows the activation pin according to Figure 5A where the valve is shut by air pressure.
- Figure 5C: shows section B-B of Figure 5A (the piston is not shown).
- Figure 5D: shows an eccentric valve lever that is freely movable in the piston of the activation pin.
- Figure 6A: shows the fourth embodiment of an activation pin similar to Figure 5, with a rotatable piston valve which is activated by the eccentric valve lever.
- Figure 6B: shows the activation pin according Figure 6A, where the piston valve is closed by air pressure.
- Figure 6C: shows view Z of Figure 6A.
- Figure 6D: shows cross section C-C of Figure 6B.
- Figure 7: shows a fifth embodiment of the invention in a distal position to the pressure source in a valve connector that can be squeezed onto valves.
- Figure 8A: shows an enlargement of the invention according to Figure 7 where the valve in the activation pin is activated.
- Figure 8B: shows section D-D of figure 8A.
- Figure 8C: shows an enlargement of the invention according to Figure 7 where the valve in the activation pin is kept closed by the spring.
- Figure 8D: shows the embodiment according to Figure 8C, with a different sealing surface.
- Figure 9: shows the sixth embodiment of the invention in a distal position to the pressure source in a valve connector that can be squeezed onto valves.
- Figure 10A: shows an enlargement of the embodiment of Figure 9 where the valve in the activation pin is in a closed position or activated position (broken lines).
- Figure 10B: shows the top of the activation pin according to Figure 10A with spring suspension and intake (view Y).
- Figure 10C: shows a section after the line E-E in Figure 10A.
- Figure 10D: shows a section after the line F-F in Figure 10A.
- Figure 11A: shows the embodiment according to Figure 10A, with a different sealing surface.
- Figure 11B: shows en enlargement of the sealing surface of the embodiment of Figure 11A.

### DESCRIPTION OF PREFERRED EMBODIMENTS

Figure 1A shows a cross section of e.g. a piston rod 801 with a channel 802. Its curve is defined by two unique modular parametrisation Fourier Series expansion.

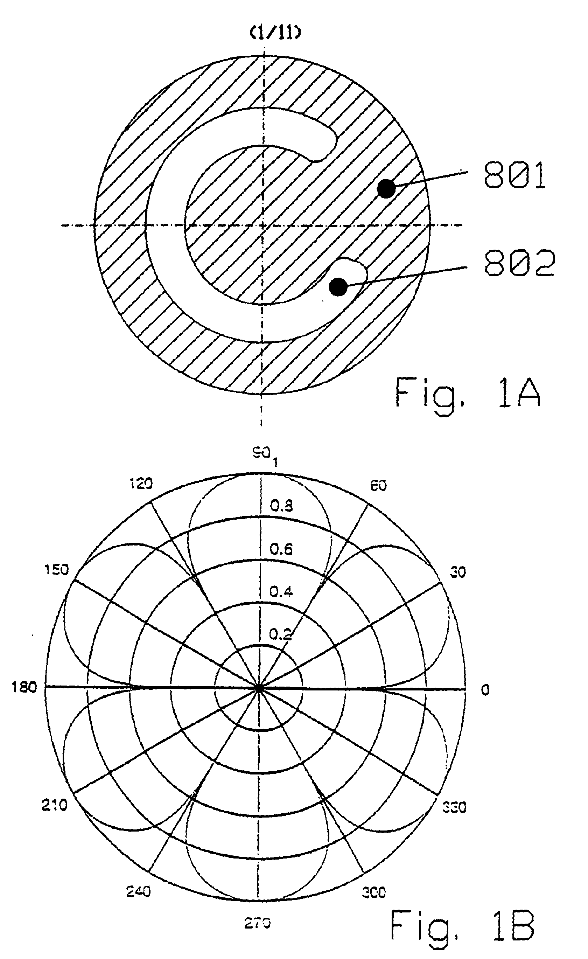

Figure 1B shows a mathematical model of the "flower-shaped" cross section that provides a suitable approximation. The general formula for this cross section is found above. In the model shown is:
   *r*₀ ≈ 0.4 *r*_{*max*}*, m* = 4 *and n* = 6.
   The change from a central drilling 303,410,533,653 to the circle round section of expansions 312,313,411,412,538,539,658 can mathematically be expressed by
   *r*₀ *→ r*ₘₐₓ
   under retention of the other parameters.

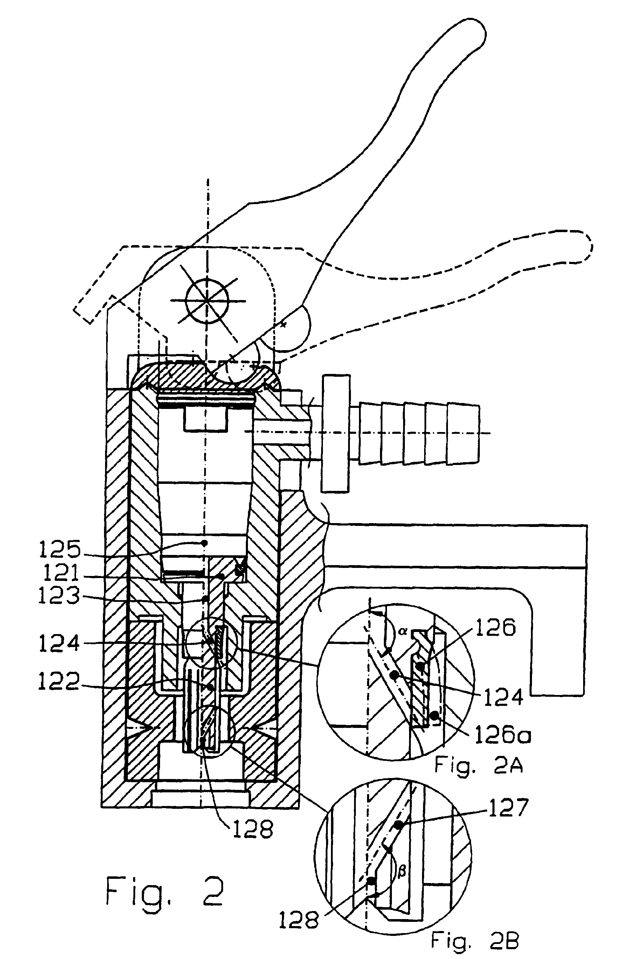

   Figure 2 shows the first embodiment with the piston 121 in its distal position to the pressure source in a valve connector that is squeezed onto valves. The piston 121 has a piston rod 122 and is equipped with a centre blind drilling 123 which branches into at least one radial drilling 124. Both blind drillings 123,128 has e.g. a "flower-shaped" cross section, of which the radius r₀ of blind drilling 123 is larger than radius r₀ of blind drilling 128. The proximal part of drilling 123 and the distal part of drilling 128 can be provided with gradual expansions (not shown), seen from the pressure source.
Figure 2A shows the radial drilling 124 which has an azimuth angle a to the central axis 125 of the piston 121. The angle a is shown larger than 90°. The radial drilling 124 is led to the underside of the valve 126. The valve 126 is shown in its open position by means of a broken line 126a. Valve 126 is fastened by being squeezed between e.g. the upper and lower part (not shown) of the piston rod.
Figure 2B shows the radial drilling 127 which is open at an angle β to the blind drilling 128. The angle β is shown larger than 90°. The radial drilling 127 is led to e.g. a centre blind drilling 128 at a distal position on the piston rod 122.

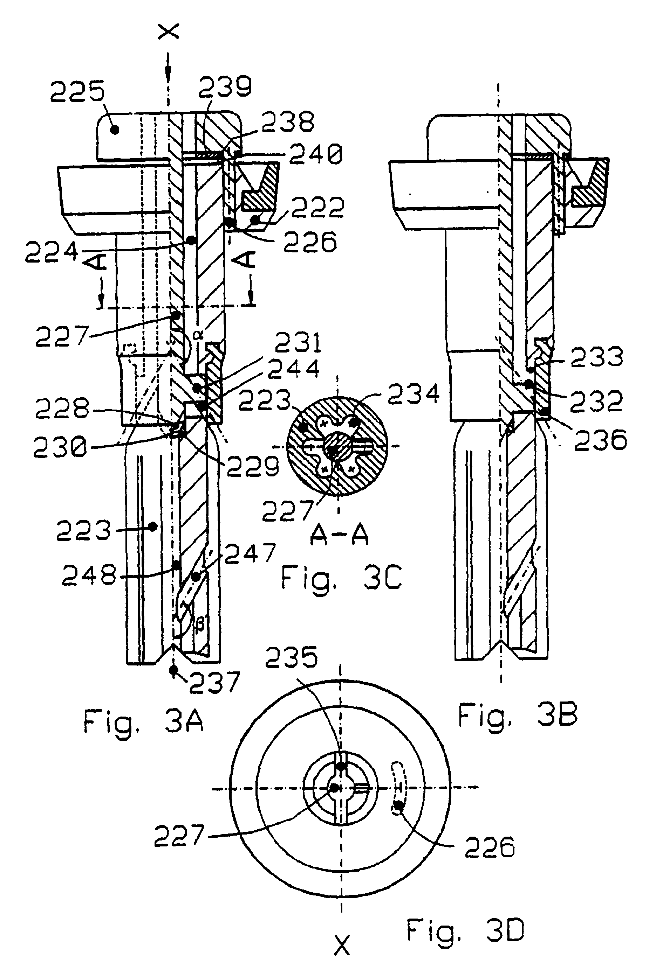

Figure 3A shows a further development of the activation pin pursuant to Figure 2 where the axially movable piston valve 225 is in activated position by the eccentric valve lever 226 which is integrated in the piston valve 225 and where the piston valve rod 227 has a sealing surface 228 which is positioned at the end in order to ensure that the piston valve 225 always opens up and make an air flow possible e.g. from the space between the non-return valve of a pump and the activation pin to the surroundings, when a Schrader-valve is uncoupled. The piston rod 223 has a sealing 229 with a sealing surface 230. The piston valve 225 has a sealing 238 with sealing surface 239 and the top of the piston 222 has a sealing surface 240. The radius r₀ of drilling 248 is smaller than radius r₀ of drilling 224. The air flows through the central drilling 224 which has a "flower-shaped" secton and around the piston rod 227 which has a circular cross section resulting in air channels 234 (section A-A) which form the central drilling 224. Stop device 231 prevents the piston valve from being pulled out of the activation pin as it strokes against the piston rod 223. Radial drilling 247 distally. Centre axis 237 of the activation pin. The piston valve can have a gradual expansion (not shown) proximal the pressure source.
Figure 3B shows the activation pin according to Figure 3A where the piston valve 225 is kept shut by air pressure. The valve function is fulfilled by the sealing 236 in full accordance with Figure 2. The stop device 231 has a stop surface 232 and the piston rod 223 has a stop surface 233.
Figure 3C shows section A-A of the piston valve 223 which has a "flower-shaped" section and the piston valve rod 227 which has a circular cross section resulting in air channel 234 in order to enable a suitable flow through the section with a reliable guidance of the piston valve rod 227.
Figure 3D shows view X of the top of the activation pin where the piston valve rod 227 is hanged up in shackle 235. Besides, the figure also shows the eccentric valve lever 226 which is integrated into the piston valve 225 and which is a section of a cylinder surface. In an appropriate embodiment not shown the valve lever is made by means of at least two legs that can be arranged rotationally symmetric around the central axis 237 of the activation pin. The embodiments described in Figure 3D are, of course, applicable in connection with the other embodiments.

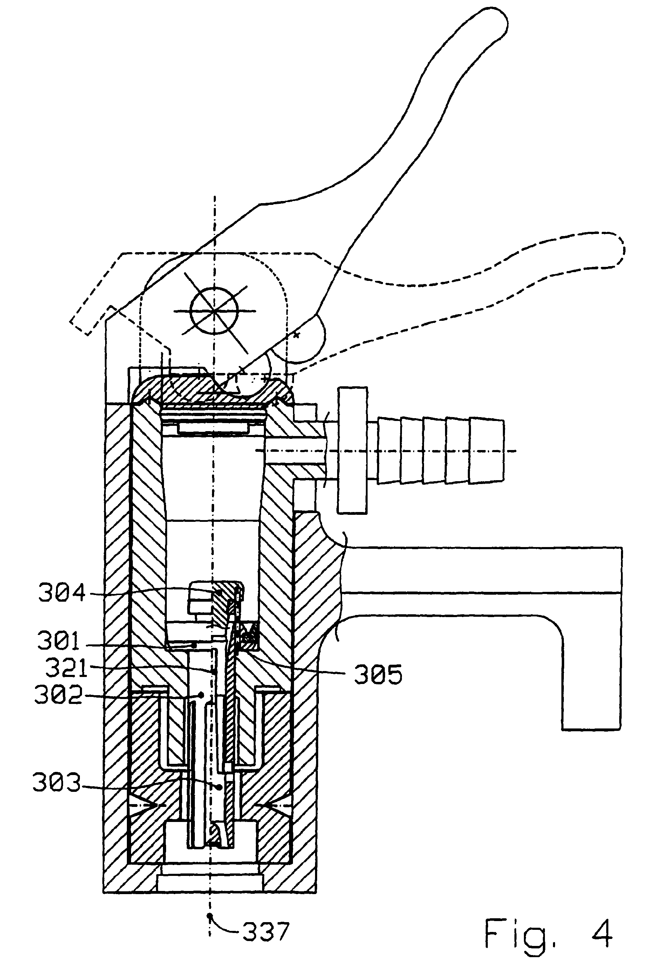

Figure 4 shows the third embodiment of the activation pin with piston 301 in its distal position to the pressure source in a coupling house of a valve connector that can be squeezed onto tires valves. The piston 301 has a piston rod 302 and has a central drilling 303. The activation pin has a piston valve 304 and an eccentric valve lever 305. Centre axis 337.
Figure 5A shows an enlargement of the activation pin of Figure 4 where the axially movable piston valve 304 is in activated position by the eccentric valve lever 305 and where it has a sealing 306 with a sealing surface 307. The piston 301 has a sealing surface 309. The air flows through the proximally gradual expansion 310 of the central drilling 303 which e.g has a "flower-shaped" section to the distally gradual expansion 311. The wall 312,313 forms an angle γ or δ, respectively, with the central axis 337 of the central drilling 303 and these angles are each larger than 0° and smaller than 20° and are usually in the interval between 6° and 12°. Both expansions 310,311 have an approximately circular section. Together the "flower-shaped" cross-section of the piston valve rod 322 air channels 321 are defined of which e.g. four can be used in order to get an approximately laminair air flow. The stop 315 prevents the piston valve 304 to be pulled out of the activation pin in case that the coupling is connected to a piston pump without a non-return valve. The stop 315 is resiliently mounted by means of the bar 316 in the bottom 317 of the piston valve rod 322. The activation pin has distally at least one fin or a shackle 318 which is optimally shaped in terms of air flow.
Figure 5B shows the activation pin according to Figure 5A where the piston valve 304 is kept shut by air pressure. The stop device 315 has stop surface 319 and the stop surface 320 is a part of the piston rod 302.
Figure 5C shows a section B-B with the air channel 311 which has a suitable flow through the section area. Moreover, the stop device 315 and the fin 318 are shown.
Figure 5D shows the activation pin in an activated position with an eccentric valve lever 350 which is freely movable in the piston 301 of the activation pin and on which the piston valve 353 presses at the top 351. The stop device 352 ensures that the valve lever does not fall through the piston 301. In an appropriate embodiment not shown the valve lever has at least two legs which can be positioned rotationally symmetrical around the center axis 337 of the activation pin. The valve lever can also be designed as the valve lever 226 shown in Figure 3A. Embodiments described in Figure 5D are, of course, also applicable in connection with the other embodiments.

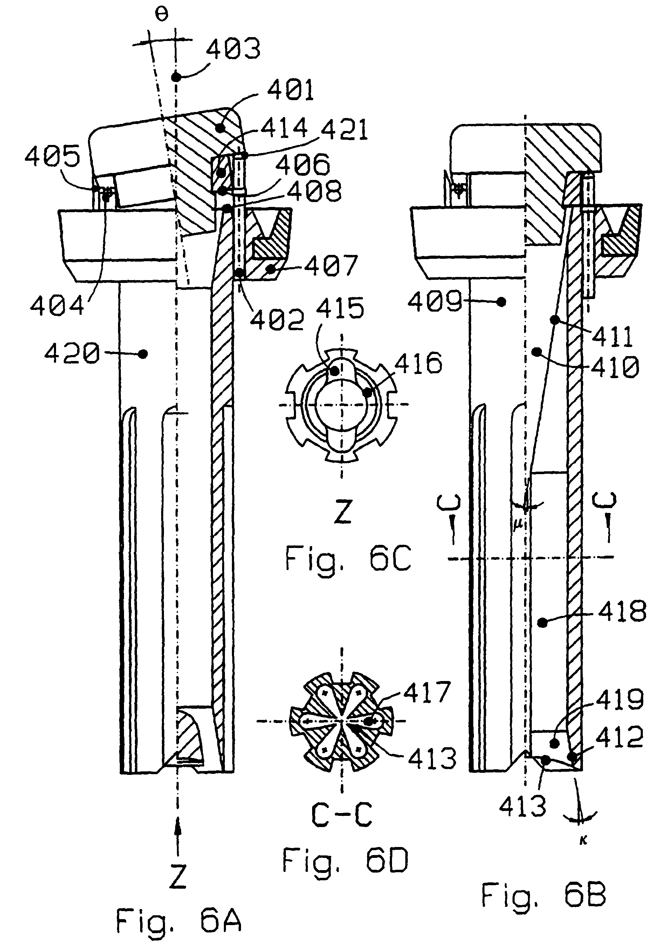

Figure 6A shows a fourth embodiment of the activation pin, which is similar to the third embodiment, in a position where the piston valve 401 is opened by the activated eccentric valve lever 402. The piston valve 401 is rotatable over an angle θ from the central axis 403 of the activation pin. It rotates around an axis 404 which is perpendicular to the central axis 403. The rotation of the piston valve 401 is limited by the stop device 405. The piston valve 401 has a sealing 414 with a sealing surface 406, while the piston 407 has a sealing surface 408. For the rest is the activation pin similar to Figure 5A, except for the piston rod 420 and the eccentric valve lever 402 to Figure 5D which has a rounded top 421.
Figure 6B shows the activation pin similar to fig. 6A with the piston valve 401 shut. The piston rod 409 has different parameters for the "flower-shaped" cross section of the central drilling 418. Also here are two gradual expansions 410,412 and walls 411,412, respectively, with characteristics according to those of Figure 5A: angles µ and κ in relation to the centre axis 403. The contact area 413 (see also fig. 6B) of the activation pin with a Schrader-valve has a cone shape. No bridge is necessary, as r₀ is smaller than the diameter of the core of a Schrader-valve.
Figure 6C shows view Z of fig. 6A with fin 415 and opening 416.
Figure 6D shows cross section C-C of Figure 6B with the "flower-shaped" cross section of the piston rod 409 defining air channel 417. Contact area 413 with the core of Schrader.

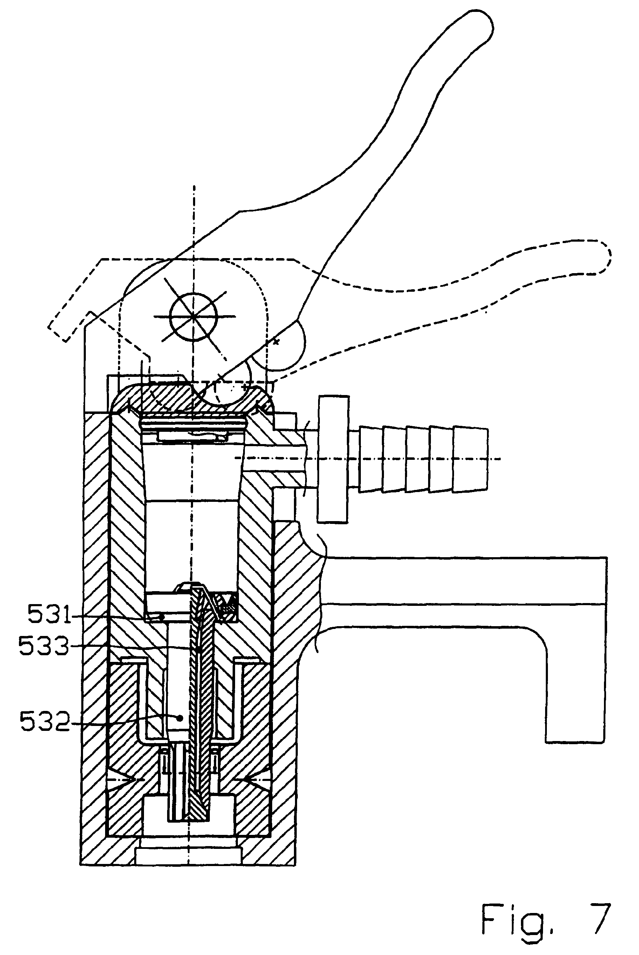

Figure 7 shows a fifth embodiment with the piston 531 in its distal position to the pressure source in the coupling house of a valve connector that can be squeezed onto valves. The piston 531 has a piston rod 532 and is equipped with a centre drilling 533.
Figure 8A shows the activation pin in activated position where an axially slidable valve 534 has a seal face 535. The air flows through a proximal (to the pressure source) gradual expansion 536 of the centre drilling 533 and through the latter to the distal gradual expansion 537. The wall 538,539 forms an angle ρ or ϕ, respectively, to the wall 540 of the centre drilling 533. These are larger than 0° and smaller than 20° (usually in the interval between 6° and 12°). Both expansions 536,537 have an approximately circular cross section distally from the connection to the centre drilling 533. Centre axis 543. Piston valve rod 544.
Figure 8B shows the section D-D from figure 8A where the air channel 533 is defined by a "flower-shaped" cross section of the piston rod 532 and a circular cross section of the valve rod 544. Furthermore, a fin 542 is shown.

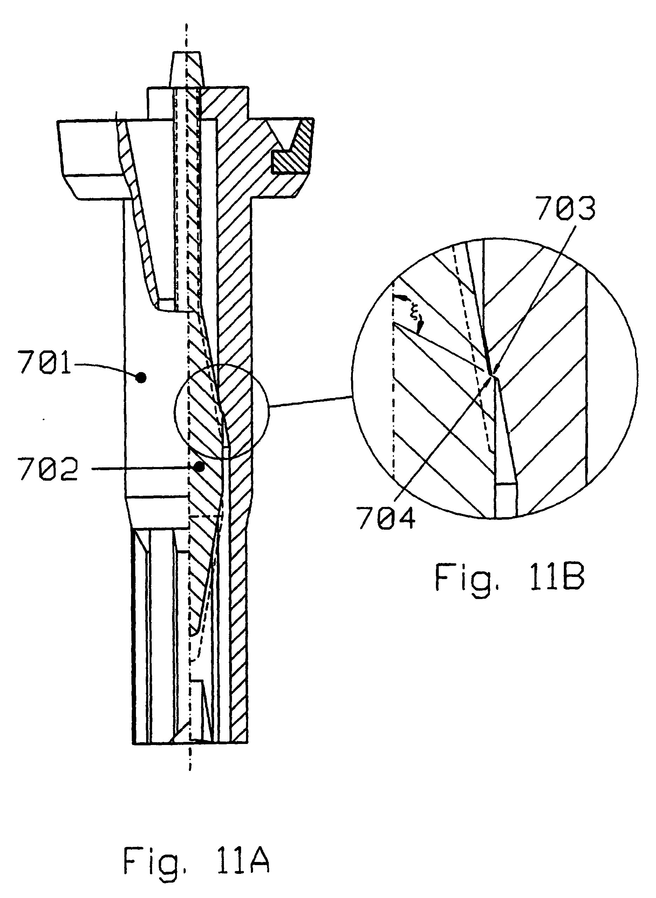

Figure 8C shows the activation pin with a closed valve. The spring 541 secured in the piston 531 is an elastic band which presses the axially slidable valve 534 down so that the seal face 535 of the valve is pressed against the wall 538 of the expansion 536. The seal face 535 can have a similar sealing (not showed) with the wall 538 as showed in Figure 11A, 11B.
Figure 8D shows an improved sealing surface arrangement. Sealing 550 with surface 551 and piston rod 553 with sealing surface 552. Angle ψ between 90°-150° (incl.).

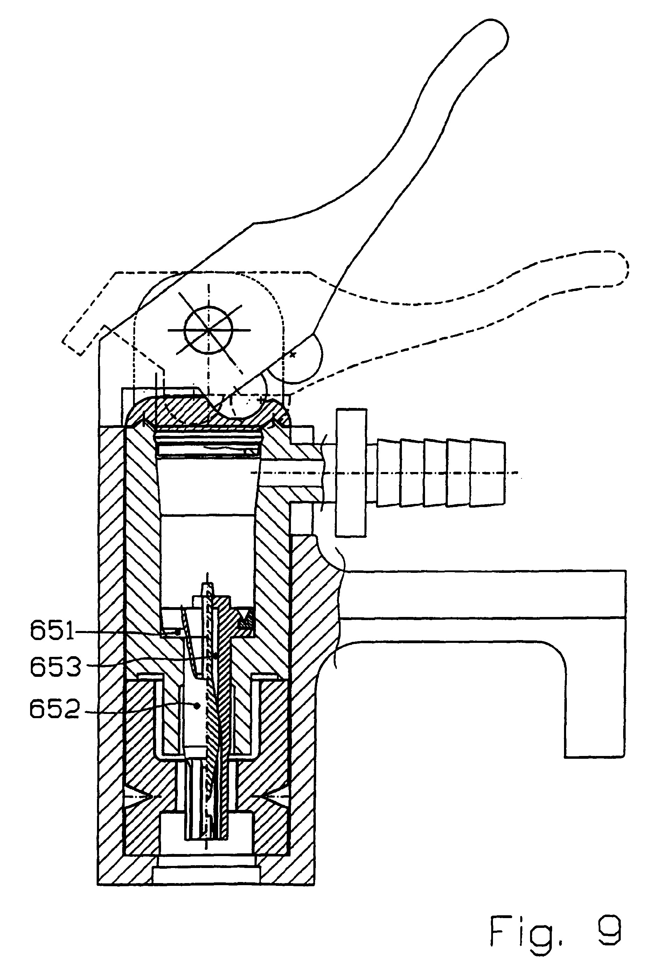

Figure 9 shows a sixth embodiment with the piston 651 in its distal (to the pressure source) position in a coupling house of a valve connector that can be squeezed onto valves. The piston 651 has a piston rod 652 and is equipped with a centre drilling 653.

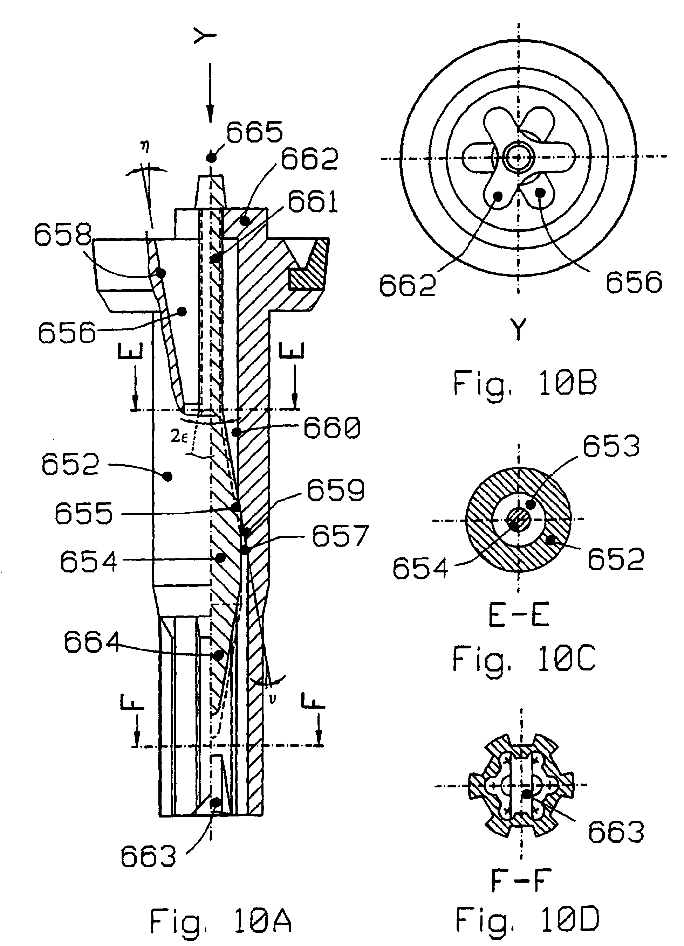

Figure 10A shows the activation pin in its closed position and its activated position (broken lines) where the axially slidable valve 654 has a seal face 655. The air flows through the expansion 656 of the centre drilling 653 and through the latter to the distal gradual expansion 657 and the distal part of the piston rod with a "flower-shaped" cross section. The wall 658,659 forms an angle *η* or ν, respectively, to the wall 660 of the centre drilling 653. These angles are each larger than 0° and smaller than 20° (usually in the interval between 6° and 12°). Both expansions 656,657 have an approximately circular cross section. The valve 654 has a spring part 661 secured in a brace 662. Distally, the activation pin has at least one fin or brace 663. Furthermore, a cone 664 is shown.
Figure 10B shows the top (view Y) of the activation pin shown in figure 10A with the three expansions 656 and braces 662. The braces serve as a securing device for the valve spring and the expansions 656 ensure a suitable flow cross section.
Figure 10C shows that the section E-E in figure 10A resulting in a cylindrical air channel 653. A suitable flow cross section is also ensured here.
Figure 10D shows the section F-F in figure 10A. Internally, this section of the piston rod 652 is "flower-shaped" to ensure a suitable flow cross section. Furthermore, a fin designed as a brace 663 is shown.
Figure 11A shows an activation pin similar to the one of Figure 10, with the difference that the sealing surface 704 of the cone 702 and the corresponding surface 703 for the piston rod 701 have an angle ξ equal or larger than 90° and less than approximately 150° with the centre axis 665 seen in the air flow direction at flow from the pressure source.

### Advantageous combination of the features can be the following ones:

Activating pin for a valve connector, which activating pin is designed as a piston (121,222,301,407,531,651) with a piston rod (122,223,302,409,420,532,652,701), moving in the coupling house of the valve connector where the activating pin has a central drilling (123,128,224,248,303,418,533,653) and a piston valve (126,225,304,353,401,534,654,702) kept closed by a spring force which is where one or more channels (123,128,224,234,303,321, 417,418,533,653,657) are defined by the piston rod (122,223,302,409,420,532,652,701) and/or the piston valve rod (227,322,544,661) in the assembled activating pin which channels (123,128,224,234,303,321,417,418,533,653,657) are positioned in a mainly longitudinal direction in relation to the centre axis (125,237,337,403,543,665) of the activating pin, of which the cross section approximately can be defined by at least one closed curve, which can be defined by two unique modular parametrisation Fourier Series expansions, one for each co-ordinate function: 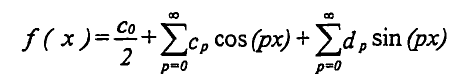 where 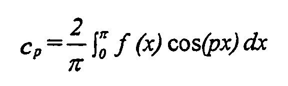 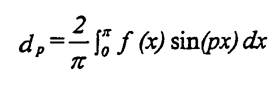 0 ≤ *x* ≤ 2π, *x* ∈ 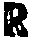 *p* ≥ *0*, *p* ∈ 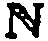
- *c*_{*p*} *=*: *cos-weighted average values off(x),*
- *d*_{*p*} *=*: *sin-weighted average values off(x),*
- *p =*: *representing the order of trigonometrical fineness*
The curves can be approximately defined by at least one regular curve bounding a region which is symmetric with reference to at least one line which lie in the section plane through the mathematical pole and can be defined by a single Fourier Series expansion: 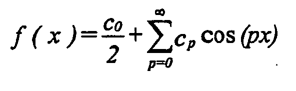 where 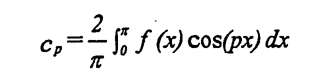 0 ≤ *x* ≤ 2π, *x* ∈ 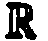 *p* ≥ 0, *p* ≤ ∈ 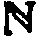
- *c*_{*p*} *=*: *weighted average values off(x),*
- *p =*: *representing the order of trigonometrical fineness*
the curves can be approximately defined by the formula: 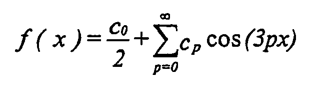 where 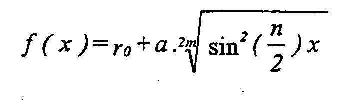 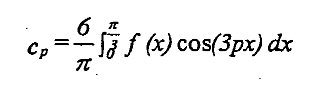 0 ≤ *x* ≤ 2π, *x* ∈ 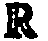 *p* ≥ 0, *p* ∈ 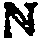
- *c*_{*p*} *=*: *weighted average values off(x),*
- *p =*: *representing the order of trigonometrical fineness*
and where this cross section in polar co-ordinates is represented by the following formula: 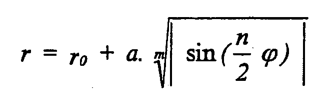 where
*r*_{*0*} *≥* 0,
*a ≥* 0,
*m* ≥ 0, *m* ∈ R,
*n* ≥ 0*, n ∈* R*,*
0 ≤ ϕ ≤ 2Π, and where
- *r =*: *the limit of the ''petals'' in the circular cross section of the activating pin,*
- *r*_{*0*} *=*: *the radius of the circular cross section around the axis of the activating pin,*
- *a =*: *the scale factor for the length of the ''petals'',*
- *r*_{*max*} *=*: *r*_{*0*} + *a*
- *m =*: *the parameter for definition of the "petal" width*
- *n =*: *the parameterfor definition of the number of ''petals''*
- ϕ *=*: *the angle which bounds the curve.*
The channels (123,128,224,234,303,321,417,418,533,653,657) can be positioned approximately parallel with the centerline (125,237,337,403, 543,665) of the activating pin.
The centre drilling (123,128) can be designed as two blind drillings, parallel with the centre axis (125) which at both ends of the activating pin reach into the activating pin where it is connected by means of suitable radial drillings (124,127), that the proximal radial drilling (124) proximal to the pressure source has an azimuth angle (α) larger than or equal to 90° to the centre axis (125) of the piston (121) seen in the air flow direction at flow from the pressure source, and that the piston rod (122) is equipped with a concentric valve (126) of elastic material which is squeezed onto the piston rod (122) covering the side drilling (124).
The distal radial drilling (127) can have an azimuth angle (β) larger than or equal to 90° to the centre blind drilling (128) of the piston rod (122) seen in the flow direction of the air at flow from the pressure source. The radius ro of the distal centre blind drilling (128). can be smaller than ro of the proximal part of the centre drilling (123).
The spring force can be procured by means of the combination of pressurized air and the valve lever (226,305,402), which passes through the piston (222,301,407) eccentrically.
The piston valve (225,304) can be axially movable.
The piston valve (225,304) can be equipped with a stop device (231,315).
The piston rod (223) can be equipped with at least one radial drilling (244,247) and with a concentric valve (236) of elastic material which is squeezed onto the piston rod (223) and which is covering the radial drilling (244).
The radial drilling (244) can have an azimuth angle (α) larger than or equal to 90° with the center axis (237) of the piston (223) seen in the flow direction of the air at flow from the pressure source.
The radial drilling (247) is placed distally on the piston rod (223) which also has a central drilling (248) wherein the radial drilling (247) can have an azimuth angle (β) which is larger than or equal to 90° with the centre axis (237) of the piston rod (223) centre drilling (248) and where radial drilling (247) ends up in the centre drilling (248).
The piston valve rod (227) can be hung up by means of a securing device (235).
The central drilling (303,418) at each end can be gradually expanding to an approximately circular cross section (310,311,410,419).
The expanding wall (312,313,411,412) can have an angle (Υ,µ) or (δ,κ), respectively, in relation to the central axis (337,403) of the activating pin which angles each are larger than 0° and smaller than 20°.
The angle (Υ,µ) or (δ,κ), respectively, can be in the interval between 6° and 12°.
The top (240,309,408) of the piston (222,301,407) of the activating pin at the central drilling (224,303) can procure a valve seat for the sealing means (238,306,414) of the piston valve (225,304,401).
The bottom (228) of the piston valve rod (227) can procure a valve seat for the sealing means (229) in the bottom of the central drilling (224).
The valve lever (350) can be axially freely movable through the top surface (351) where the mobility is limited by the piston valve (353) and by the piston (301) through the stop device (352). he valve lever (226,305) can be equipped with at least two legs.
The legs of the valve lever (226,305) can be organized rotationally symmetric around the central axis (237,337).
The valve lever (226) can be an integrated part of the piston valve (225) being a part of a cylinder surface.
The piston rod (302,420) can be equipped with at least one fin (318).
The piston valve (401) can rotate around an axis (404) which is perpendicular to the centre axis (403).
The rotation of the piston valve (401) can be limited by a stop device (405).
The valve lever (402) can be axially freely movable where the mobility is limited by the piston valve (401) by through the top surface 351 and the piston (407) through the stop device (352).
The radius ro of the central drilling (418) can be smaller than the diameter of the core of a Schrader-valve contact area (413).
The centre drilling (533) can go through the entire piston rod (532).
The piston valve rod (544,553) can be controlled by the piston and that the valve spring device (541) consists of an elastic band.
The wall (538,539) of the centre drilling at each end of the piston rod (532,553) can be gradually expanding to an approximately circular cross section at either end.
The wall (538,539) of the gradual expansion (536,537) can form an angle ρ or ϕ, respectively, with the centre axis (543) which is larger than 0° and smaller than 20°.
The angle ρ or ϕ , respectively, can be in the interval between 6° and 12°. The wall (538) of the gradual expansion (536) by the piston part of the centre drilling (533) can form a valve seat for the seal face (535) of the piston valve (534).
The piston valve (534) can be equipped with at least one fin (542). The sealing surface (551) of the sealing (550) can form an angle Ψ equal or larger than 90° and equal or less than 150° in relation to the centre axis (543) of the activating pin seen in the flow direction of the air at flow from the side of the pressure source.
The piston valve (654) and the spring (661) can be made in one piece of a deformable material with a suitable modulus of elasticity.
The slidable valve (654) and the spring (661) can consist partly of a conic section with an apex angle (2ε) and partly of an approximate cylindrical section with a mainly circular cross section and that the spring (661) is secured in the piston part (651) of the activating pin by means of a securing device (662).
The wall (658,659) of the centre drilling (653) in the activating pin can be gradually expanding to an angle η or ν , respectively, to the centre axis (665) of the activating pin.
The angle η or ν, respectively, to the centre axis (665) of the activating pin can be each larger than 0° and smaller than 20°.
The angle η or ν, respectively, is in the interval between 6° and 12°.
The wall (659) of the gradual expansion (657) of the centre drilling (653) can form a valve seat for the seal face (655) of the valve (654).
The conic section of the slidable valve (654) can consist of two cone parts resting upon each other.
The fin (542) can be equipped with a device perpendicular to the fin.
The sealing surface (704) of cone (702) can form an angle ξ equal or larger than 90° and less than approximately 150° in relation to the centre axis (665) of the activating pin seen in the flow direction of the air at flow from the pressure source.

## Claims

1. An activating pin for a valve connector for connecting to spring-force operated valves, the connector comprising
- a housing to be connected to a pressure source,
- within the housing
- a coupling hole having a central axis and an inner diameter approximately corresponding to the outer diameter of the inflation valve to which the valve connector is to be connected, and
- a cylinder and means for conducting gaseous media between the cylinder and the pressure source, and where the activating pin
- is arranged to engage a central spring-force operated core pin of the inflation valve,
- is arranged to be situated within the housing in continuation of the coupling hole coaxially with the central axis thereof, and
- comprises a piston part with a piston, which piston is to be positioned in the cylinder movable between a first piston position and a second piston position,
wherein
- the activating pin comprising a channel,
- said piston part comprises a first end and a second end, wherein the piston is located at said first end and said channel has an opening at said first end,
- a valve part being movable in the channel, drivable by difference in forces acting on surfaces of the valve part, between a first valve position and a second valve position, wherein said first valve position leaves said opening open, and said second valve position closes said opening, and
- the top of the piston part forming a valve seat for a seal face of the valve the valve means.

2. An activating pin according to claim 1, in a valve connecter for connecting to inflation valves, wherein the channel comprising a part being partly expanding in the direction towards the valve part, the angle of the expanding wall being 0-20°, such as 6-12°, in relation to a central axis of the activating pin.

3. An activating pin according to claim 1 or 2, in a valve connecter for connecting to inflation valves, wherein it comprises means for driving said valve part into said first valve position when the piston is in the first piston position.

4. An activating pin according to claim 1, in a valve connecter for connecting to inflation valves, wherein said valve part is arrangend to move in respect of said piston part in the longitudinal direction of said piston part.

5. An activating pin according to claim 1, in a valve connecter for connecting to inflation valves, wherein said valve part is arrangend to rotate around a rotational axis mounted at said first end perpendicularly to the longitudinal axis of said piston part.

6. An activating pin according to claim 4, in a valve connecter for connecting to inflation valves, wherein it comprises stopping means to limit the movement of said valve part in the longitudinal direction of said piston part.

7. An activating pin according to claim 5, in a valve connecter for connecting to inflation valves, wherein it comprises stopping means to limit the rotation of said valve part in the first valve position.

8. An activating pin according to claim 4, in a valve connecter for connecting to inflation valves, wherein
- said piston part comprises a first end and a second end, wherein the piston is located at said first end,
- said channel comprises a first channel portion and a second channel portion, both in the longitudinal direction of said piston part and connected to each other at a transition point, and
- said valve part comprises a valve rod arrangend to move within said first channel portion and having a free end;
wherein said first valve position corresponds to said valve part being moved in the longitudinal direction of said piston part to a position where the free end of said valve rod leaves open the transition point between said first channel portion and said second channel portion, and said second valve position corresponds to said valve part being moved in the longitudinal direction of said piston part to a position where the free end of said valve rod closes the transition point between said first channel portion and said second channel portion.

9. An activating pin according to claim 8, in a valve connecter for connecting to inflation valves, wherein at least one end of said first channel portion and said second channel portion has a larger cross section area at its other end than at its next end to said transition point.

10. An activating pin according to claim 4, in a valve connecter for connecting to inflation valves, wherein said piston part comprises a first end and a second end, wherein the piston is located at said first end,
- said channel comprises a drilling extending from said first end to said second end, the opening of said drilling at said first end being circular, and
- said valve part comprises
- a valve rod with a channel positioned in the longitudinal direction of said valve part, said valve rod arrangend to move within said drilling, and
- a cylindrical valve sealing at one end of said valve rod, the axis of said cylindrical valve sealing being in the longitudinal direction of said piston part, said drilling and said valve rod, and the outer diameter of said valve sealing being larger than the diameter of the circular opening of said drilling at said first end;
wherein said first valve position corresponds to said valve part being moved in the longitudinal direction of said piston part to a position where said valve sealing leaves open the circular opening of said drilling at said first end, and said second valve position corresponds to said valve part being moved in the longitudinal direction of said piston part to a position where said valve part closes the circular opening of said drilling at said first end.

11. An activating pin according to claim 3, in a valve connecter for connecting to inflation valves, wherein said means is an integrated part of the valve part.

12. The use of an activating pin according to claim 1. in a valve connector for connecting to inflation valves.
